# EUROPÄISCHE PATENTSCHRIFT

(11) **EP 0 226 080 B1**
(45) Veröffentlichungstag und Bekanntmachung des Hinweises auf die Patenterteilung: **23.02.1994**
(21) Anmeldenummer: 86116272.5
(22) Anmeldetag: 24.11.1986
(51) Int. Cl.: C08G 69/44, C08J 5/18

(54) **Vollaromatische mesomorphe Polyesteramide, deren Herstellung und Verwendung**
Wholly aromatic mesogenic polyesteramides, their fabrication and their use
Polyesteramides totalement aromatiques mésomorphes, leur fabrication et leur utilisation

(30) Priorität: 04.12.1985 DE 3542856
(43) Veröffentlichungstag der Anmeldung: 24.06.1987
(73) Patentinhaber: BASF Aktiengesellschaft, 67063 Ludwigshafen (DE)
(72) Erfinder: Hisgen, Bernd, Dr., D-6703 Limburgerhof (DE); Portugall, Michael, D-6706 Wachenheim (DE); Sterzel, Hans-Josef, Dr., D-6701 Dannstadt-Schauernheim (DE)

(56) Entgegenhaltungen:
- EP-A- 0 081 900
- EP-A- 0 131 846
- US-A- 3 859 251
- US-A- 4 339 375

## Beschreibung

Gegenstand der Erfindung sind vollaromatische mesomorphe Polyesteramide, die unterhalb 320°C eine flüssigkristalline fadenbildende Schmelze bilden.

Es sind schon eine Reihe von flüssig-kristallinen Polyesteramiden bekannt. Solche Polymere sind jedoch hinsichtlich ihrer Wärmeformbeständigkeit, ihrer Verarbeitbarkeit und insbesondere ihrer geringen Abriebfestigkeit verbesserungsbedürftig. In der US-PS 43 55 132 werden Polyesteramide aufgebaut aus 4-Hydroxibenzoesäure, 2,6-Naphthalindicarbonsäure, Hydrochinon, Isophthalsaure und 4-Aminophenol oder 1,4-Phenylendiamin beschrieben. In der US-PS 43 30 457 werden Polyesteramide, aufgebaut aus Hydroxinaphthalincarbonsäure, Terephthalsäure, Hydrochinon und p-Aminophenol beschrieben. Solche Polyesteramide haben jedoch eine Glasübergangstemperatur von etwa 105°C. Das gleiche gilt für die aus US-PS 43 51 917 bekannten Polyesteramide, die aus p-Aminophenol, p-Hydroxibenzoesäure und Hydroxinaphthalincarbonsäure aufgebaut sind. In der EP-PS 7715 werden Polyesteramide, die aus mindestens 50 % Resten von p-Aminophenol sowie Alkoxiterephthalsäure aufgebaut sind, beschrieben. Schließlich sind aus der EP-Anmeldung 81 900 Polyesteramide bekannt, die mindestens zu 40 % aus coaxialen Einheiten wie aromatischen Dicarbonsäuren, hydroxiaromatischen Carbonsäuren, Bisphenolen und Aminophenolen bestehen und eine ausreichende Menge an nicht-linearen Resten enthalten, die sich von aromatischen meta-Aminoverbindungen oder zweikernigen aromatischen Sulfonen ableiten. Es wird jedoch kein Hinweis gegeben, welche Zusammensetzung erforderlich ist, um die gewünschte Eigenschaftskombination zu erzielen.

Es war deshalb die technische Aufgabe gestellt, vollaromatische mesomorphe Polyesteramide zur Verfügung zu stellen, die unterhalb 320°C eine flüssig-kristalline fadenbildende Schmelze zeigen, und sich somit leicht verarbeiten lassen und darüberhinaus eine hohe Wärmeformbeständigkeit, eine gute Abriebfestigkeit sowie eine gute Zähigkeit aufweisen.

Diese Aufgabe wird gelöst durch vollaromatische mesomorphe Polyesteramide, die unterhalb 320°C eine flüssig-kristalline fadenbildende Schmelze bilden, aufgebaut aus
a) 5 bis 25 Mol.% wiederkehrenden Einheiten der Formel I 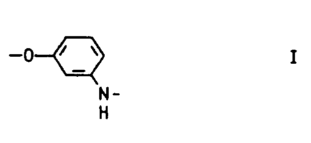
b) 5 bis 20 Mol.% mindestens eine der wiederkehrenden Einheiten der Formeln II, III und IV 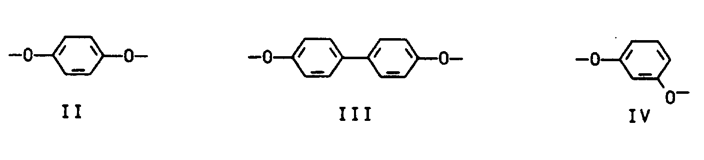
c) einer der Summe der Komponente a) und b) entsprechenden molaren Menge an wiederkehrenden Einheiten der Formeln V und/oder VI 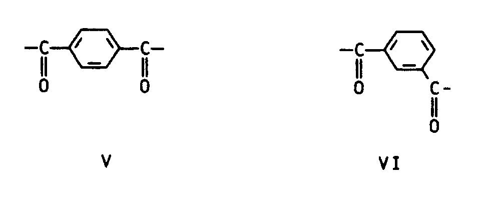
d) wiederkehrende Einheiten der Formel VII in einer Menge von mindestens 20 Mol.% 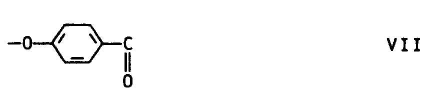
e) gegebenenfalls 5 bis 25 Mol.% an wiederkehrenden Einheiten der Formel VIII 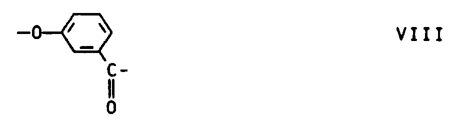 wobei die Summe der Molprozente aus den Komponenten a) bis e) jeweils 100 Mol.% ist.

Die neuen Polyesteramide haben den Vorteil, daß sie bei einer Temperatur unterhalb 320°C eine flüssigkristalline fadenbildende Schmelze zeigen und leicht verarbeitbar sind. Weiter haben die neuen Polyesteramide den Vorteil, daß sie eine glatte abriebfeste Oberfläche aufweisen und eine gute Wärmeformbeständigkeit haben. Ferner zeichnen sich die neuen Polyesteramide durch gute mechanische Werte, insbesondere eine gute Kerbschlagzähigkeit aus.

Der flüssigkristalline Zustand der Polyesteramide kann mit dem Polarisationsmikroskop nach einer in der DE-AS25 20 819 beschriebenen Methode nachgewiesen werden. Zwischen gekreuzten Polarisatoren weisen die Polymerschmelzen, die in einer Schichtdicke von 10 µm zwischen Glasplatten aufgetragen sind, Texturen auf, die einer mesomorphen Phase zugeordnet werden können.

Die erfindungsgemäßen Polyesteramide sind aufgebaut aus
a) 5 bis 25 Mol.%, insbesondere 5 bis 25 Mol.% wiederkehrenden Einheiten der Formel I 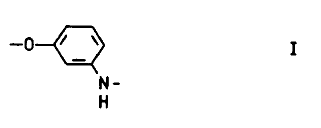 eine geeignete Ausgangsverbindung ist m-Aminophenol
b) 5 bis 20 Mol. %, vorzugsweise 5 bis 20 Mol.% mindestens eine der wiederkehrenden Einheiten der Formeln II, III oder IV 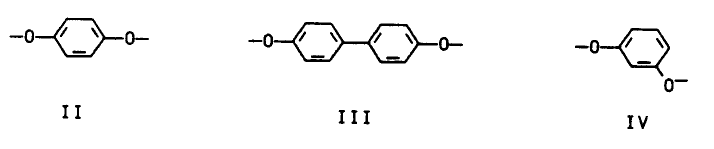 geeignete Ausgangsverbindungen sind beispielsweise Hydrochinon, 4,4'-Dihydroxibiphenyl oder Resorcin. Besonders bevorzugt sind wiederkehrende Einheiten der Formeln II und III und deren Gemische.
c) einer Summe der Komponenten a) und b) entsprechenden molaren Menge an wiederkehrenden Einheiten der Formeln V und/oder VI 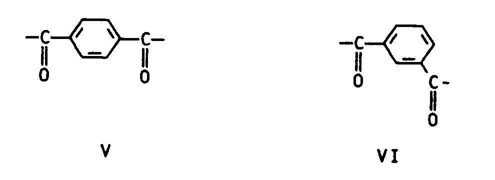 geeignete Ausgangsverbindungen sind beispielsweise Terephthalsäure und Isophthalsäure.
d) wiederkehrenden Einheiten der Formel VII vorteilhaft in einer Menge von mindestens 20 Mol.% 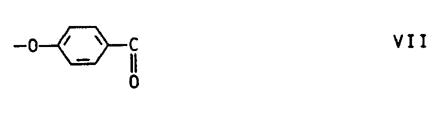 Eine geeignete Ausgangsverbindung ist beispielsweise p-Hydroxibenzoesäure.
e) gegebenenfalls 5 bis 25 Mol.%, insbesondere 5 bis 15 Mol.% wiederkehrenden Einheiten der Formel VIII 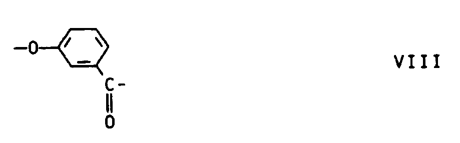 Eine geeignete Ausgangsverbindung ist beispielsweise m-Hydroxibenzoesäure.
   Bevorzugt sind die Polyesteramide, die aus wiederkehrenden Einheiten der Formel I, II und/oder III, und wieder Kehrenden Einheiten V und/oder VI sowie wieder Kehrenden Einheiten VII in den oben angegebenen molaren Verhältnissen aufgebaut sind.

Bevorzugte vollaromatische Polyesteramide haben eine Glasübergangstemperatur von ≧ 140°C, insbesondere ≧ 150°C. Die Glastemperatur soll dabei gemessen werden mit der DSC-Methode, wie sie beschrieben ist, von K.H. Illers in Makromol. Chem., Band 127 (1969), Seiten 1 ff. Die vollaromatischen flüssigkristallinen Polyesteramide bilden bei einer Temperatur <320°C eine flüssigkristalline fadenbildende Schmelze. Bevorzugt sind auch flüssig-kristalline aromatische Polyesteramide, die bei einer Temperatur >200°C und <300°C Teilkristallinität aufweisen.

Die erfindungsgemäßen flüssigkristallinen Polyesteramide lassen sich erhalten durch eine Reihe von Techniken, wie sie beispielsweise in der US-PS 43 75 530 und 41 18 372 beschrieben werden.

Nach einer vorteilhaften Arbeitsweise erhält man die erfindungsgemäßen Polyesteramide in einem Einstufen-Verfahren, bei dem man die Ausgangsstoffe in nicht-derivatisiertem Zustand unter Verwendung von Anhydriden niederer Fettsäuren, z.B. Fettsäuren mit 2 bis 4 Kohlenstoffatomen, insbesondere Essigsäureanhydrid, umsetzt. Es ist möglich, hierbei Katalysatoren wie sie z.B. in der EP-A-13 18 846, Seite 9 beschrieben sind in Mengen von 0,001 bis 1 Gew.% mitzuverwenden. Bei der Umsetzung werden die nicht-derivatisierten Ausgangsstoffe zusammen mit Fettsäureanhydrid vorteilhaft in einem mindestens 5 %igen molaren Überschuß, bezogen auf die vorhandenen Hydroxi- und Aminogruppen unter Inertgasatmosphäre und Rühren auf eine Temperatur erhitzt, bei der Rückfluß zu beobachten ist. Vorteilhaft wird die Temperatur stufenweise gesteigert, z.B. hochstens 5 Stunden, vorzugsweise bis zu 2 Stunden auf 130 bis 200°C. Anschließend wird die Temperatur z.B. innerhalb von 2 bis 2 1/2 Stunden auf 250 bis 350°C gesteigert. Hierbei werden überschüssige Fettsäurenahydride und Fettsäuren abdestilliert. Um die Reaktion zu vervollständigen, hat es sich als vorteilhaft erwiesen, gegen Ende der Umsetzung verminderten Druck, z.B. von 200 bis 0,1 mbar anzuwenden.

Bemerkenswert und nicht vorherzusehen bei der Anwendung dieses Einstufen-Verfahrens ist zunächst die problemlose und vollständige Reaktion ohne Katalysator-Zusatz zu den gewünschten Polymeren in einer relativ kurzen Zeit. Dies ist umso bemerkenswerter, als durch die Vielzahl chemisch unterschiedlicher Hydroxy- und Aminogruppen eine Abstufung der Reaktivitäten und damit ein mangelhafter polymerer Aufbau zu erwarten wäre.

Die so erhaltenen vollaromatischen flüssig-kristallinen Polyesteramide werden vorteilhaft in festem Zustand, z.B. bei Temperaturen von 150 bis 250°C bis zur gewünschten Viskosität weiter kondensiert. Diese Nachkondensation in fester Phase kann sowohl vor, als auch nach einer thermoplastischen Verarbeitung erfolgen. Die Festphasenkondensation führt man vorteilhaft in Inertgasatmosphäre, z.B. in Stickstoff durch.

Die Polyesteramide gemäß der Erfindung können durch übliche Zusatzstoffe wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, faser- oder pulverförmige Füllstoffe und Verstärkungsmittel, Keimbildungsmittel oder Weichmacher modifiziert werden, die in üblichen wirksamen Mengen eingesetzt werden.

Die Stabilisatoren können den Polymeren in jedem Stadium der Herstellung oder den fertigen Polymeren zugesetzt werden. Vorzugsweise werden die Stabilisatoren zu einem frühen Zeitpunkt zugesetzt, um zu verhindern, daß die Zersetzung bereits beginnt, bevor die Polymeren geschützt werden können.

Zu den Oxidationsverzögerern und Wärmestabilisatoren, die den Polyesteramiden zugesetzt werden können, gehören diejenigen, die allgemein zu Polymeren zugesetzt werden wie Halogenide von Metallen der Gruppe I des periodischen Systems, z.B. von Natrium, Kalium oder Lithium wie Chloride, Bromide oder Iodide mit Kupfer-I-Halogeniden wie Chloriden, Bromiden oder Iodiden, sterisch gehinderte Phenole, Hydrochinone, verschiedene substituierte Vertreter dieser Gruppen und Kombinationen derselben in Konzentrationen bis 1 Gew.%, bezogen auf das Polymere. Geeignete UV-Stabilisatoren sind beispielsweise substituierte Resorcine, Salicylate, Benztriazole, Benzophenone und dgl. sowie Mischungen derselben. Solche UV-Stabilisatoren werden in der Regel in Mengen bis zu 2 Gew.%, bezogen auf das Polymere angewandt.

Ferner können zugesetzt werden organische Farbstoffe wie Nigrosin, Pigmente wie Titandioxid, Cadmiumsulfid, Cadmiumsulfid-Selenit, Phthalocyanine, Ultramarinblau oder Ruß. Farbstoffe und Pigmente werden im allgemeinen in Mengen bis zu 5,0 Gew.% angewandt. Ferner faser- oder pulverförmige Füllstoffe und Verstärkungsmittel wie Kohlenstoff-Fasern, Glasfasern, amorphe Kieselsäure, Asbest, Kalziumsilikat, Aluminiumsilikat, Magnesiumcarbonat, Kaolin, Kreide, gepulverter Quarz, Glimmer, Feldspat, in der Regel in Mengen bis zu 70 Gew.% der so ausgerüsteten Masse. Geeignete Keimbildungsmittel sind beispielsweise Talkum, Calciumfluorid, Natriumphenylphosphinat, Aluminiumoxid und feinteiliges Polytetrafluorethylen. Schließlich sind geeignete Zusatzstoffe Weichmacher in Mengen bis zu 20 Gew.% wie Phthalsäuredioctylester, Phthalsäuredibenzylester, Phthalsäurebutylbenzylester, Kohlenwasserstofföle, N,n-Butylbenzolsulfonamid, o- und p-Toluolethylsulfonamid.

Die erfindungsgemäßen vollaromatischen flüssig-kristallinen Polyesteramide eignen sich zur Herstellung von Fasern, Faden, Folien, Schäumen und technischen Formteilen durch Spritzguß, Pressen oder Extrusion.

Die aus den erfindungsgemäßen Polyesteramiden hergestellten Formteile zeichnen sich aus durch hervorragende mechanische Eigenschaften wie Steifigkeit, Festigkeit und Zähigkeit aus. Sie sind außerordentlich chemikalienresistent und flammwidrig. Zudem besitzen sie eine hohe Wärmeformbeständigkeit und eine glatte abriebfeste Oberfläche. Die erfindungsgemäßen Polyesteramide eignen sich daher hervorragend zur Herstellung von Formteilen für die Elektro- und Datentechnik, den Fahrzeugbau und andere technische Bereiche. Sie können aber auch als Überzugs- und Beschichtungsmittel pulverförmig dispergiert oder als Film verwendet werden.

Die Erfindung sei an folgenden Beispielen veranschaulicht.

### Beispiel 1

0,2 Mol Terephthalsäure, 0,26 Mol p-Hydroxibenzoesäure, 0,07 Mol Hydrochinon, 0,07 Mol Dihydroxibiphenyl und 0,06 Mol m-Aminophenol und 85 ml Acetanhydrid werden unter Stickstoffatmosphäre und Rühren innerhalb von 3 h von 150°C auf 300°C erhitzt. Dabei wird überschüssiges Acetanhydrid und Essigsäure abdestilliert. Anschließend wird innerhalb 1 h der Druck auf 55 mbar reduziert, Man erhält eine viskose fadenbildende Schmelze. Die Polymerschmelze und das erkaltete Polymer zeigen einen perlmuttartigen Glanz. Das Polymer besitzt eine glatte, harte und abriebfeste Oberfläche. Aus DSC-Messungen ergibt sich eine Glastemperatur von 154°C und eine Schmelztemperatur von 290°C. Die inhärente Viskosität beträgt 1,93 dl/g, gemessen in 0,1 %iger (Gew./Vol.) Lösung in Pentafluorphenol bei 60°C.

### Beispiel 2

0,2 mol Terephthalsäure, 0,26 mol p-Hydroxibenzoesäure, 0,07 Mol Hydrochinon, 0,04 mol Dihydroxibiphenyl und 0,09 mol m-Aminophenol und 105 mol Acetanhydrid werden unter Stickstoffatmosphäre und Rühren innerhalb von 2 h 40 min von 150°C auf 350°C erhitzt. Dabei wird überschüssiges Acetanhydrid und Essigsäure abdestilliert. Anschließend wird innerhalb 40 min der Druck auf 110 mbar reduziert. Man erhält eine hochviskose fadenbildende Schmelze. Die Polymerschmelze und das erkaltete Polymer zeigen einen perlmuttartigen Glanz. Das Polymer besitzt eine glatte, harte und abriebfeste Oberfläche. Aus DSC-Messungen ergibt sich eine Glastemperatur von 158°C.

Die inhärente Viskosität beträgt 1,09 dl/g, gemessen in 0,1 %iger (Gew./Vol.) Lösung in Pentafluorphenol bei 60°C,

### Beispiel 3

0,2 mol Terephthalsäure, 0,26 Mol p-Hydroxibenzoesäure, 0,07 mol Hydrochinon und 0,13 mol m-Aminophenol und 105 ml Acetanhydrid werden unter Stickstoffatmosphäre und Rühren innerhalb von 2 h 40 min von 150°C auf 300°C erhitzt. Dabei wird überschüssiges Acetanhydrid und Essigsäure abdestilliert. Anschließend wird innerhalb von 40 min der Druck auf 90 mbar reduziert. Man erhält eine hochviskose fadenbildende Schmelze. Das Polymer besitzt eine glatte, harte und abriebfeste Oberfläche. Die DSC-Messung ergibt sich eine Glastemperatur von 166°C. Die inhärente Viskosität beträgt 0,62 dl/g, gemessen in 0,1 %iger (Gew./Vol.) Lösung in Pentafluorphenol bei 60°C.

## Patentansprüche (Patentansprüche für folgende(n) Vertragsstaat(en): BE, CH, DE, FR, GB, IT, LI, LU, NL, SE)

1. Vollaromatische mesomorphe Polyesteramide, die unterhalb von 320°C eine flüssigkristalline fadenbildende Schmelze bilden, aufgebaut aus
a) 5 bis 25 Mol.% wiederkehrenden Einheiten der Formel I 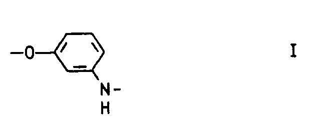
b) 5 bis 20 Mol.% mindestens eine der wiederkehrenden Einheiten der Formeln II, III und IV 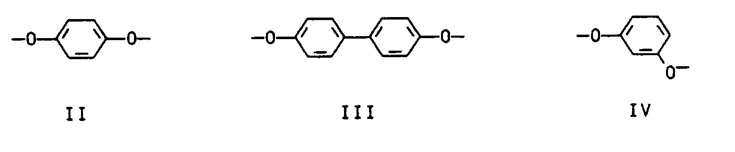
c) einer der Summe der Komponenten a) und b) entsprechenden molaren Menge an wiederkehrenden Einheiten der Formeln V und/oder VI 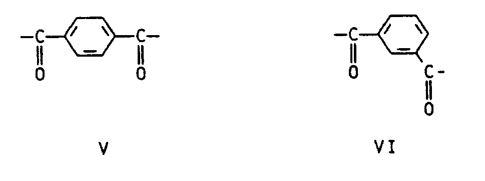
d) wiederkehrende Einheiten der Formel VII in einer Menge von mindestens 20 Mol.% 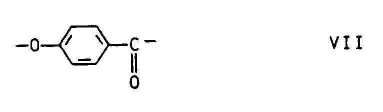
e) gegebenenfalls 5 bis 25 Mol.% wiederkehrenden Einheiten der Formel VIII 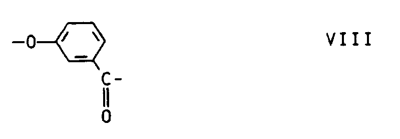 wobei die Summe der Molprozente aus den Komponenten a) bis e) jeweils 100 Mol.% ergibt.

2. Vollaromatische mesomorphe Polyesteramide nach Anspruch 1, dadurch gekennzeichnet, daß sie aufgebaut sind aus wiederkehrenden Einheiten der Formeln I, II und/oder III und wiederkehrenden Einheiten der Formeln V oder VI sowie wiederkehrenden Einheiten der Formel VII.

3. Vollaromatische mesomorphe Polyesteramide nach den Ansprüchen 1 bis 2, dadurch gekennzeichnet, daß sie eine Glasübergangstemperatur Tg ≧ 140°C haben.

4. Verfahren zur Herstellung von vollaromatischen mesomorphen Polyesteramiden nach den Ansprüchen 1 bis 3, dadurch gekennzeichnet, daß man die Monomeren in Form der underivatisierten Hydroxi-Amino bzw. Carboxyverbindungen in einem Einstufen-Verfahren und in beschriebenen molaren Verhältnissen unter Zusatz von überschüssigem Fettsäureanhydrid bei erhöhter Temperatur umsetzt und Fettsäureanhydrid und Fettsäure aus dem Reaktionsgemisch abdestilliert.

5. Verfahren nach Anspruch 4, dadurch gekennzeichnet, daß man die vollaromatischen Polyesteramide nach der Kondensation in der Schmelze durch Kondensation in fester Phase bei einer Temperatur von 150 bis 250°C nachkondensiert.

6. Verwendung von vollaromatischen mesomorphen Polyesteramiden nach den Ansprüchen 1 bis 3 zur Herstellung von Fasern, Folien und Formteilen.

## Patentansprüche (Patentansprüche für folgende(n) Vertragsstaat(en): AT)

1. Verfahren zur Herstellung von vollaromatischen mesomorphen Polyesteramiden, die unterhalb von 320°C eine flüssigkristalline fadenbildende Schmelze bilden, aufgebaut aus
a) 5 bis 25 Mol.% wiederkehrenden Einheiten der Formeln I 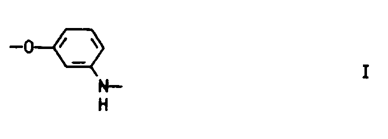
b) 5 bis 20 Mol.% mindestens eine der wiederkehrenden Einheiten der Formeln II, III und IV 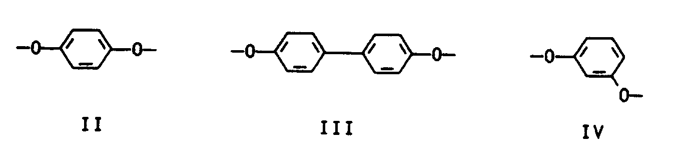
c) einer der Summe der Komponenten a) und b) entsprechenden molaren Menge an wiederkehrenden Einheiten der Formeln V und/oder VI 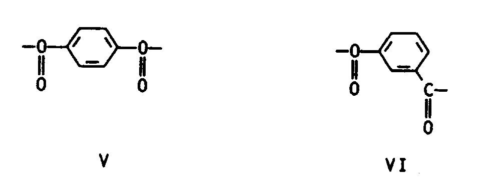
d) wiederkehrenden Einheiten der Formel VII in einer Menge von mindestens 20 Mol.% 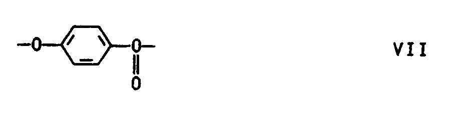
e) gegebenenfalls 5 bis 25 Mol.% wiederkehrenden Einheiten der Formel VIII 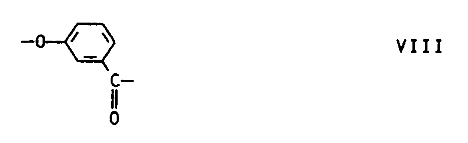 wobei die Summe der Molprozente aus den Komponenten a) bis e) jeweils 100 Mol.% ergibt, durch Umsetzen der den Einheiten I bis VIII entsprechenden Hydroxy-, Amino- und Carboxyverbindungen oder deren Ester bildenden Derivate.

2. Verfahren nach Anspruch 1, dadurch gekennzeichnet, daß die vollaromatischen mesomorphen Polyesteramide aufgebaut sind aus wiederkehrenden Einheiten der Formeln I, II und/oder III und wiederkehrenden Einheiten der Formeln V oder VI sowie wiederkehrenden Einheiten der Formel VII.

3. Verfahren nach den Ansprüchen 1 bis 2, dadurch gekennzeichnet, daß die vollaromatischen mesomorphen Polyesteramide eine Glasübergangstemperatur Tg ≧ 140°C haben.

4. Verfahren nach den Ansprüchen 1 bis 3, dadurch gekennzeichnet, daß man die Monomeren in Form der underivatisierten Hydroxi-Amino- bzw. Carboxyverbindungen in einem Einstufen-Verfahren und in beschriebenen molaren Verhältnissen unter Zusatz von überschüssigem Fettsäureanhydrid bei erhöhter Temperatur umsetzt und Fettsäureanhydrid und Fettsäure aus dem Reaktionsgemisch abdestilliert,

5. Verfahren nach den Ansprüchen 1 bis 4, dadurch gekennzeichnet, daß man die vollaromatischen Polyesteramide nach der Kondensation in der Schmelze durch Kondensation in fester Phase bei einer Temperatur von 150 bis 250°C nachkondensiert.

6. Verwendung von vollaromatischen mesomorphen Polyesteramiden nach den Ansprüchen 1 bis 5 zur Herstellung von Fasern, Folien und Formteilen.

## Claims (Claims for the following Contracting State(s): BE, CH, DE, FR, GB, IT, LI, LU, NL, SE)

1. A wholly aromatic mesomorphic polyester amide which forms a liquid-crystalline fiber-forming melt below 320°C and is composed of
a) from 5 to 25 mol % of repeat units of the formula I 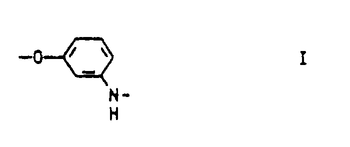
b) from 5 to 20 mol % of one or more of the repeat units of the formulae II, III and IV 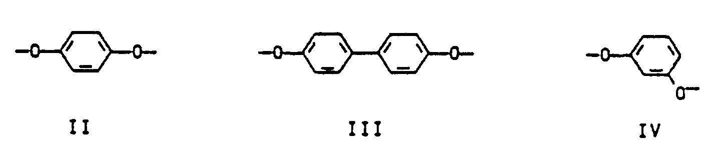
c) a molar amount corresponding to the total amount of components a) and b) of repeat units of the formulae V and/or VI 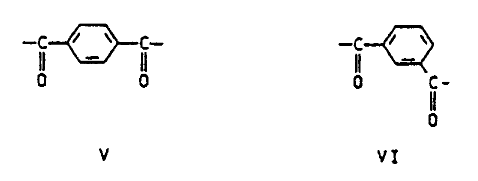
d) repeat units of the formula VII in an amount of at least 20 mol % 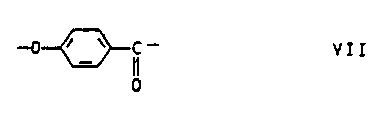
e) if desired from 5 to 25 mol % of repeat units of the formula VIII 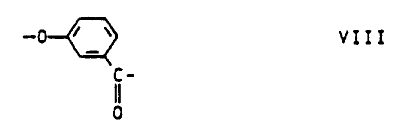 the mole percentages of components a), b), c), d) and e) adding up to 100 mol % in each case.

2. A wholly aromatic mesomorphic polyester amide as claimed in claim 1, which is composed of repeat units of the formulae I, II and/or III and repeat units of the formula V or VI and repeat units of the formula VII.

3. A wholly aromatic mesomorphic polyester amide as claimed in claim 1 or 2, which has a glass transition temperature Tg ≧140°C.

4. A process for preparing a wholly aromatic mesomorphic polyester amide as claimed in any of claims 1 to 3, which comprises reacting the monomers in the form of underivatized hydroxyamino and carboxy compounds in a single-stage process and in the molar ratios described in the presence of excess fatty acid anhydride at elevated temperature and distilling fatty acid anhydride and fatty acid out of the reaction mixture.

5. A process as claimed in claim 4, wherein the wholly aromatic polyester amide, after the condensation in the melt, is postcondensed in the solid phase at 150-250°C.

6. The use of a wholly aromatic mesomorphic polyester amide as claimed in any of claims 1 to 3 for producing fibers, films and moldings.

## Claims (Claims for the following Contracting State(s): AT)

1. A process for preparing a wholly aromatic mesomorphic polyester amide which forms a liquid-crystalline fiber-forming melt below 320°C and is composed of
a) from 5 to 25 mol % of repeat units of the formula I 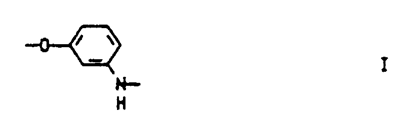
b) from 5 to 20 mol % of one or more of the repeat units of the formulae II, III and IV 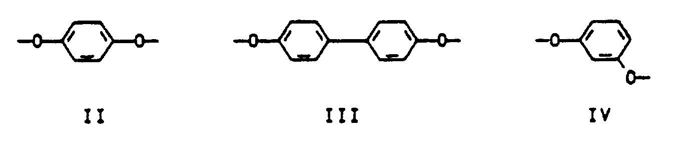
c) a molar amount corresponding to the total amount of components a) and b) of repeat units of the formulae V and/or VI 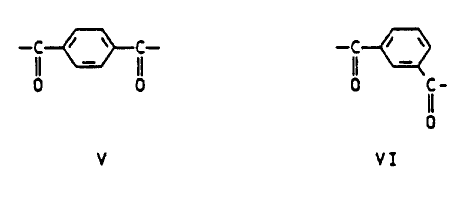
d) repeat units of the formula VII in an amount of at least 20 mol % 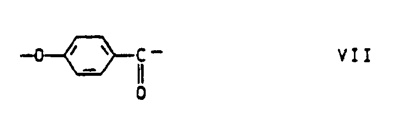
e) if desired from 5 to 25 mol % of repeat units of the formula VIII 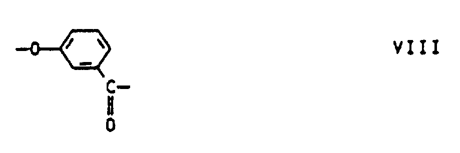 the mole percentages of components a), b), c), d) and e) adding up to 100 mol % in each case, by reacting the hydroxy, amino and carboxy compounds corresponding to the units I to VIII or their ester-forming derivatives.

2. A process as claimed in claim 1, wherein the wholly aromatic mesomorphic polyester amide is composed of repeat units of the formulae I, II and/or III and repeat units of the formula V or VI and repeat units of the formula VII.

3. A process as claimed in claim 1 or 2, wherein the wholly aromatic mesomorphic polyester amide has a glass transition temperature Tg ≧140°C.

4. A process as claimed in any of claims 1 to 3, which comprises reacting the monomers in the form of underivatized hydroxyamino and carboxy compounds in a single-stage process and in the molar ratios described in the presence of excess fatty acid anhydride at elevated temperature and distilling fatty acid anhydride and fatty acid out of the reaction mixture.

5. A process as claimed in any of claims 1 to 4, wherein the wholly aromatic polyester amide, after the condensation in the melt, is postcondensed in the solid phase at 150-250°C.

6. The use of a wholly aromatic mesomorphic polyester amide as claimed in any of claims 1 to 5 for producing fibers, films and moldings.

## Revendications (Revendications pour l'(les) Etat(s) contractant(s) suivant(s): BE, CH, DE, FR, GB, IT, LI, LU, NL, SE)

1. Polyesteramides totalement aromatiques mésomorphes qui forment au-dessous de 320°C, une masse fondue cristalline liquide formant des fils, constitués par
a) 5 a 25% en moles de motifs répétitifs de formules I 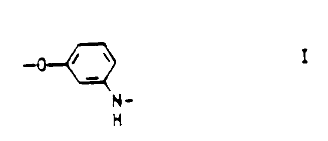
b) 5 à 20% en moles d'au moins l'un des motifs répétitifs de formules II, III et IV 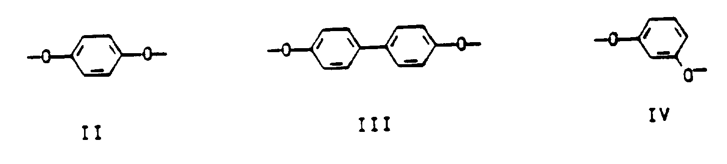
c) une quantité molaire de motifs répétitifs de formules V et/ou VI correspondant à la somme des composants a) et b) 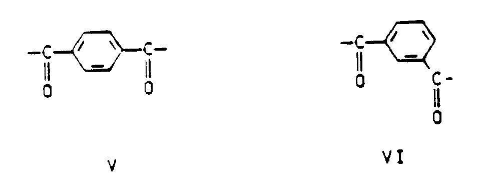
d) des motifs répétitifs de formule VII dans une proportion d'au moins 20% en moles 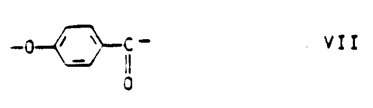
e) éventuellement 5 à 25% en moles de motifs répétitifs de formule VIII 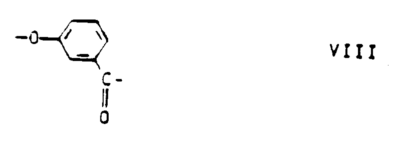 la somme des pourcentages en moles des composants a) à e) étant égale chaque fois à 100% en moles,

2. Polyesteramides totalement aromatiques mésomorphes selon la revendication 1, caractérisés en ce qu'ils sont constitués par des motifs répétitifs de formules I, II et/ou III et par des motifs répétitifs de formules V ou VI, ainsi que par des motifs répétitifs de formule VII.

3. Polyesteramides totalement aromatiques mésomorphes selon la revendication 1 ou 2, caractérisés en ce qu'ils ont une température de transition vitreuse Tg ≧ 140°C.

4. Procédé de préparation des polyesteramides selon l'une quelconque des revendications 1 à 3, caractérisé en ce qu'on fait réagir à température élevée les monomères sous forme des composés hydroxy, amino ou carboxy non dérivés, en un procédé à une seule étape et dans les rapports molaires indiqués, avec addition d'anhydride d'acide gras en excès, et on chasse par distillation du mélange réactionnel l'anhydride d'acide gras et l'acide gras,

5. Procédé selon la revendication 4, caractérisé en ce qu'après la condensation dans la masse fondue, on soumet les polyesteramides totalement aromatiques à une post-condensation en phase solide à une température de 150 à 250°C.

6. Utilisation de polyesteramides totalement aromatiques mésomorphes selon l'une quelconque des revendications 1 à 3 pour la fabrication de fibres, de feuilles et de pièces moulées.

## Revendications (Revendications pour l'(les) Etat(s) contractant(s) suivant(s): AT)

1. Procédé de préparation de polyesteramides totalement aromatiques mesomorphes qui forment, au-dessous de 320°C, une masse fondue cristalline liquide formant des fils, constitués par
a) 5 a 25% en moles de motifs répétitifs de formules I 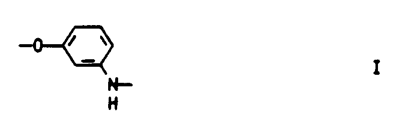
b) 5 à 20% en moles d'au moins l'un des motifs répétitifs de formules II, III et IV 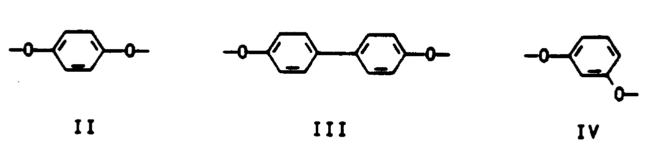
c) une quantité molaire de motifs répétitifs de formules V et/ou VI correspondant à la somme des composants a) et b) 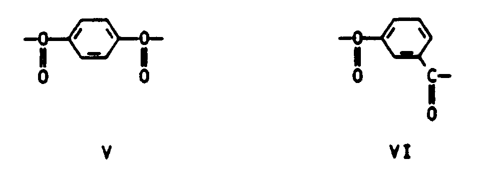
d) des motifs répétitifs de formule VII dans une proportion d'au moins 20% en moles 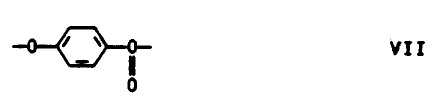
e) éventuellement 5 à 25% en moles de motifs répétitifs de formule VIII 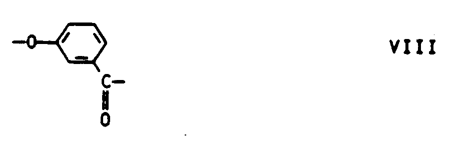 la somme des pourcentages en moles des composants a) à e) étant égale chaque fois à 100% en moles,
par réaction des composés hydroxy, amino et carboxy correspondant aux motifs I à VIII ou de dérivés de ceux-ci formant des esters.

2. Procédé selon la revendication 1, caractérisé en ce que les polyesteramides totalement aromatiques mésomorphes sont constitués par des motifs répétitifs de formules I, II et/ou III et par des motifs répétitifs de formules V ou VI, ainsi que par des motifs répétitifs de formule VII.

3. Procédé selon la revendication 1 ou 2, caractérisé en ce que les polyesteramides totalement aromatiques mesomorphes ont une température de transition vitreuse Tg ≧ 140°C.

4. Procédé selon l'une quelconque des revendications 1 à 3, caractérisé en ce qu'on fait réagir à température élevée les monomères sous forme des composés hydroxy, amino ou carboxy non derives, en un procédé à une seule étape et dans les rapports molaires indiqués, avec addition d'anhydride d'acide gras en excès, et on chasse par distillation du mélange réactionnel l'anhydride d'acide gras et l'acide gras.

5. Procédé selon l'une quelconque des revendications 1 à 4, caractérisé en ce qu'après la condensation dans la masse fondue, on soumet les polyesteramides totalement aromatiques à une post-condensation en phase solide à une température de 150 a 250°C.

6. Utilisation de polyesteramides totalement aromatiques mésomorphes selon l'une quelconque des revendications 1 à 5 pour la fabrication de fibres, de feuilles et de pièces moulées.
